Europäisches Patentamt

European Patent Office

Office européen des brevets

(19)

(11) Numéro de publication: **0 212 724**
**B1**

(12) **FASCICULE DE BREVET EUROPEEN**

(45) Date de publication du fascicule du brevet:
**26.10.88**

(51) Int. Cl.⁴: **B 64 C 27/82,** B 64 C 27/46,
B 64 C 11/26, F 01 D 5/28

(21) Numéro de dépôt: **86201325.7**

(22) Date de dépôt: **15.03.84**

(60) Numéro de publication de la demande initiale en application de l'article 76 CBE: **0121462**

(54) **Pale en matériaux composites, notamment pour hélice multipale à pas variable et à pales démontables individuellement, et son procédé de fabrication.**

(30) Priorité: **18.03.83 FR 8304448**

(43) Date de publication de la demande:
**04.03.87 Bulletin 87/10**

(45) Mention de la délivrance du brevet:
**26.10.88 Bulletin 88/43**

(84) Etats contractants désignés:
**DE GB IT**

(56) Documents cités:
**EP - A - 0 019 047**
**FR - A - 2 430 354**
**US - A - 3 765 267**
**US - A - 4 302 155**
**US - A - 4 332 525**

(73) Titulaire: **AEROSPATIALE SOCIETE NATIONALE INDUSTRIELLE, 37, Boulevard de Montmorency, F-75781 Paris Cédex 16 (FR)**

(72) Inventeur: **Mouilie, René Louis, Villa la Pinède Le Coton Rouge, F-13100 Aix-en-Provence (FR)**
Inventeur: **Declercq, Marc, Vieux Chemin de Lambesc, F-13330 Pelisane (FR)**
Inventeur: **Jalaguier, Jean-Pierre, Rue du Soleil, F-13127 Vitrolles (FR)**
Inventeur: **Jaugey, Bernard, Quartier Boismeau-Est, F-13410 Lambesc (FR)**

(74) Mandataire: **Lepeudry-Gautherat, Thérèse et al, ARMENGAUD JEUNE CABINET LEPEUDRY 6, rue du Fg. St-Honoré, F-75008 Paris (FR)**

## Description

La présente demande résulte d'une division de la demande de brevet européen n° 84 400 535.5-2306 (EP-A-121 462), qui concerne une hélice multipale à pas variable et à pales démontables individuellement destinée en particulier à être utilisée comme rotor arrière d'un giravion, tel qu'un hélicoptère, sur lequel le rotor arrière peut être caréné.

La présente invention se rapporte à une pale et à un procédé de fabrication de cette pale, laquelle est particulièrement destinée à l'équipement d'une hélice multipale.

Des hélices multipales à pas variable, utilisables comme rotors arrière de type caréné pour hélicoptères sont décrites dans le brevet français 1 593 008 et dans la demande de brevet français n° 2 430 354 au nom de la Demanderesse.

Dans le brevet français 1 593 008, chacune des pales de l'hélice multipale est reliée par un élément radial allongé, torsible autour de son axe longitudinal, à un moyeu entraîné en rotation par un arbre de rotor autour de l'axe de l'hélice, et un emboîtement du pied de chaque pale dans le moyeu permet à la fois la rotation de la pale autour de son axe longitudinal et un faible mouvement angulaire de la pale en battement et en traînée, tandis que, pour la commande de l'incidence, le pied de chaque pale comporte un maneton relié, par une articulation à rotule, à un plateau perpendiculaire à l'axe de l'hélice et mobile axialement.

Une telle hélice, montée comme rotor arrière, compensateur du couple d'entraînement d'un hélicoptère, dans une fenêtre ou veine délimitée verticalement dans la partie arrière du fuselage ou dans l'empennage vertical de l'hélicoptère par un carénage, est très avantageuse dans la mesure où elle apporte une grande sécurité lors des évolutions de l'hélicoptère près du sol, et qu'en raison du carénage à l'intérieur duquel tourne l'hélice, les pales de cette dernière sont soumises à des contraintes plus faibles que celles d'un rotor arrière classique, non caréné, ce qui augmente leur durée de vie.

Cependant, une telle hélice multipale présente un certain nombre d'inconvénients. En particulier, ses pales sont réalisées en métal léger. Elles sont donc sujettes à la corrosion, à l'érosion, et à la fatigue due aux contraintes alternées. De plus, l'usinage des pales est long et délicat et donc coûteux, et ceci d'autant plus que, non seulement la partie pleine de la pale soumise aux efforts aérodynamiques doit être réalisée avec un profil et une loi de vrillage précis, exactement reproductibles d'une pale à l'autre, en étant protégée au niveau du bord d'attaque par la mise en œuvre d'un procédé de durcissement superficiel tel qu'une anodisation dure, mais que le pied de pale est également délicat et coûteux à réaliser.

En effet, le pied de pale comporte d'une part, une partie intermédiaire creuse, dans laquelle sont usinés un évidement axial destiné à recevoir l'extrémité radiale externe équipée d'une douille, de l'élément allongé reliant la pale au moyeu, et un alésage transversal débouchant dans l'évidement axial et destiné à recevoir un axe passant dans la douille et assurant l'attache du pied de pale sur l'élément allongé, et d'autre part, un palier d'extrémité cylindrique, dont la surface extérieure est superficiellement durcie par chromage ou anodisation et dont la partie centrale est amincie, et qui est destiné à autoriser la rotation de la pale, autour de son axe longitudinal, pour la commande du pas.

Il en résulte qu'une telle pale est un organe dont le coût de fabrication et d'entretien est relativement élevé.

Dans la demande de brevet français n° 2 430 354 qui correspond aux caractéristiques selon les préambules des revendications 1 et 8, la Demanderesse a décrit une hélice multipale à pas variable d'un type simplifié, qui remédie à un certain nombre d'inconvénients attachés à la réalisation présentée ci-dessus et qui concernent essentiellement la durée de vie limitée de composants essentiels, tels que l'organe en forme d'étoile et les pales, ainsi que l'architecture générale complexe de l'hélice multipale.

Dans l'élice multipale faisant l'objet de la demande de brevet français n° 2 430 354, deux pales diamétralement opposées sont essentiellement constituées d'une part par un longeron commun, réalisé par une unique lame allongée en fibres à haute résistance mécanique agglomérées par une résine synthétique, la lame étant assujettie par son milieu à un moyeu et, d'autre part, par deux coquilles à profil aérodynamique fixées à la lame de part et d'autre du moyeu, l'extrémité intérieure de chaque coquille étant solidaire d'un organe de commande de l'incidence de la pale correspondante, lequel est aménagé de façon à exercer sur la coquille un couple de torsion centré sur l'axe longitudinal de la lame allongée. Cette dernière est formée de deux faisceaux plats de fibres, lesquels sont disposés de façon à ménager au milieu de la lame une ouverture autorisant le libre passage d'un axe de commande collective de l'incidence de toutes les pales, cet axe étant, comme cela est le cas dans la réalisation décrite dans le brevet français 1 593 008, monté coulissant axialement dans l'arbre du rotor qui est tubulaire. De plus, la coquille de chaque pale est réunie sur toute sa longueur à la partie correspondante de la lame par une masse de matière synthétique adhésive cellulaire ou en mousse, de faible densité et présentant éventuellement une certaine élasticité résiduelle. Chaque coquille est essentiellement formée par des couches de tissus en fibres de verre et par un bord d'attaque en tôle d'acier inoxydable, l'ensemble étant aggloméré par une résine synthétique polymérisée de façon à intégrer le bord d'attaque dans les couches de tissus.

L'organe de commande de l'incidence est constitué par un manchon moulé en matière synthetique chargée de fibres de verre et qui est solidarisé au pied de chaque pale. Une portée, constituée par un anneau circulaire métallique, est noyée dans ou collée sur l'extrémité cylindrique interne du manchon, coaxialement à l'axe longitudinal de la pale, et un doigt métallique de commande du pas est noyé dans un bras latéral porté par l'extrémité interne du manchon. Par sa portée, chaque pale est montée tournante dans un palier en matière auto-lubrifiante moulée, reposant dans des évidements semi-circulaires ménagés à la périphérie d'une part d'un carter annulaire en forme de cuvette, solidaire du moyeu de l'hélice et de son arbre d'entraînement, et d'autre part d'un capot qui surmonte le carter. L'extrémité de l'axe de commande collective de l'incidence des pales, qui traverse le moyeu, porte un plateau sensiblement perpendiculaire à cet axe et auquel sont fixées des paires de pattes munies de trous destinés à l'engagement des doigts de commande des manchons de deux pales voisines.

Cette réalisation a pour avantages que la structure du dispositif de commande de l'incidence est très simple, et que chaque pale est également d'une structure simple, robuste et légère, pratiquement insensible aux phénomènes d'éroision et à «l'effet d'entailles», de sorte que leur durée de vie est pratiquement illimitée. L'hélice multipale ainsi réalisée est d'un prix de revient bien plus faible et elle est beaucoup plus légère que les hélices à pales métalliques. De plus ses frais d'entretien sont bien moins élèves.

Cependant, il arrive qu'au cours d'atterrissages ou de décollages sur des aires non préparées, des pierres pénètrent dans la veine dans laquelle tourne l'hélice et dégradent des pales de celle-ci, à la suite de quoi il est nécessaire de démonter ces pales afin de procéder à leur réparation et/ou leur remplacement. Mais comme les pales sont agencées par paires de pales opposées, ayant, pour chaque paire, une lame allongée commune, il faut au minimum démonter une paire de pales pour chaque pale détériorée. Cette opération est extrémement complexe car le moyeu de l'hélice est formé par un empilement collé comprenant, en superposition, les parties médianes de toutes les lames allongées ainsi que deux couches extérieures de tissus de fibres de verre imprégnées d'une résine synthétique polymérisée, l'ensemble de l'empilement étant noyé dans une matière synthétique de remplissage, et le moyeu ainsi constitué étant fixé à l'arbre d'entraînement tubulaire du rotor par des paires de boulons qui traversent le pourtour de l'empilement collé, de part et d'autre de la partie médiane de chaque lame allongée.

Il en résulte un inconvénient majeur au démontage d'une paire de pales, qui ne peut être réalisé qu'en décollant l'empilement qui constitue le moyeu. Ceci ne peut se faire qu'en atelier, après avoir enlevé le capot et désaccouplé de l'arbre du rotor l'ensemble des pales et du moyeu ainsi que le carter, et les pales des pattes du plateau de commande du pas, et après avoir désaccouplé ce plateau de l'axe de commande collective du pas, afin de déposer l'hélice proprement dite.

Afin de ne pas immobiliser l'hélicoptère au sol pendant une période prolongée, il est nécessaire de remonter une hélice de rechange, ce qui suppose que l'exploitant dispose d'une telle hélice de rechange. L'obligation de remplacer l'ensemble des pales et du moyeu dès que l'une des pales est endommagée implique, dans cette réalisation également, des immobilisations financières importantes.

Enfin, cette réalisation doit obligatoirement comporter un nombre pair de pales, puisque ces dernières sont solidarisées deux à deux par des longerons communs, ce qui est désavantageux, car les hélices multipales utilisées comme rotor arrière de type caréné ont un niveau sonore plus faible lorsqu'elles comportent un nombre impair de pales.

Par la présente invention, on se propose, tout en conservant les avantages que présente la seconde réalisation décrite ci-dessus par rapport à la première, de remédier aux inconvénients de cette seconde réalisation, grâce à une pale dont l'architecture générale permet le montage, le démontage et l'entretien aisés et rapides des pales, de préférence en nombre impair, et qui, lorsqu'elles présentent une structure propre à l'invention, améliorent la fiabilité et diminuent la vulnérabilité de l'hélice multipale qu'elles équipent.

Une pale destinée à l'équipment d'une hélice multipale, et en particulier d'une hélice utilisable comme rotor arrière d'un giravion, est également décrite dans les brevets des Etats-Unis d'Amerique n° 3 647 317 et 4 306 837.

Le premier de ces deux brevets décrit une hélice de ventilateur, à flux axial, pour des tours de refroidissement et des échangeurs thermiques en général, et cette hélice est équipée de pales en fibres de verre. Chaque pale est essentiellement constituée d'une coque profilée en tissus de fibres de verre remplie avec une mousse de polyuréthane à haute densité et dans laquelle est disposée un longeron en acier présentant une section en H et noyé dans la mousse de remplissage à laquelle le longeron est lié chimiquement.

Une telle pale a pour avantage que sa peau en fibre de verre offre une exceptionelle résistance à la corrosion et à l'abrasion dans des conditions d'environnement sévères. De plus, la mousse de polyuréthane à haute densite renforce le profil sur toute l'envergure et transfère efficacement les charges appliquées sur la peau au longeron en augmentant la stabilité en torsion et la résistance aux impacts de la pale.

Mais cependant, cette pale présente un inconvénient majeur, lié à la nature et à la forme de son longeron, de réalisation coûteuse et encombrant, de sorte que cette solution n'est pas utilisable pour réaliser des pales de faible épaisseur et de poids réduit.

Dans le second des deux brevets américains précités, qui concerne un rotor arrière d'hélicomptère à deux pales diamétralement opposées reliées l'une à l'autre par un longeron commun, chaque pale comporte une peau entourant un corps de remplissage en nid d'abeille préformé, le longeron étant constitué par une bande mince et plate de fibres unidirectionnelles à haute résistance mécanique, par exemple de verre de Kevlar ou de graphite, commune aux deux pales opposées et s'étendant sur toute leur envergure, et qui présente une partie médiane relativement épaisse, formant le moyeu, à laquelle sont adjacentes deux parties plus fines, torsibles et flexibles, qui se prolongent chacune par deux parties d'éxtrémite divisées elles-mêmes chacune en deux demi-longerons dont l'un est un demi-longeron d'extrados et dont l'autre est un demi-longeron d'intrados s'étandant chacun juste sous la partie de la peau correspondante de la pale, entre cette peau et le corps de remplissage.

Dans cette réalisation également, l'inconvénient majeur réside dans la structure du longeron, commun aux deux pales opposées et en forme de H allongé et couché, donc de réalisation complexe et coûteuse.

Par la présente invention, on se propose de réaliser une pale présentant les mêmes caractéristiques avantageuses que celles décrites dans l'état de la technique mais de structure plus simple et de réalisation plus facile.

A cet effet, la pale selon l'invention, comprennant:

— une coque à profil aérodynamique, constituée d'au moins une couche de tissus de fibres à haute résistance mécanique rigidifiée par une résine synthétique d'imprégnation polymérisée,

— un corps de remplissage en une matière synthétique cellulaire ou en mousse, disposé dans la coque,

— un longeron d'axe longitudinal sensiblement parallèle à celui de la pale et constitué par une unique lame allongée de stratifils de fibres à haute résistance mécanique agglomérés par une résine synthétique polymérisée, tel que la plus grande partie de la lame est fixée dans la coque et dont une partie d'extrémité de la lame, sortant de la coque, forme une partie d'emplanture torsible et flexible par laquelle le longeron est destiné à être rattaché à un moyeu, et

— de préférence, une coiffe métallique de bord d'attaque, intégrée dans la coque, se caractérise en ce que le corps de remplissage préformé comporte une découpe qui s'étend sur toute la longueur de ce corps, qui s'ouvre dans la face du corps tournée vers la partie d'extrados de la coque et dont la section correspond sensiblement à celle du longeron dans la partie de ce dernier qui est fixée dans la coque, et en ce que la partie du longeron qui est fixée dans la coque est disposée dans le logement délimité par la découpe du corps de remplissage et la partie d'extrados en regard de la coque, et se trouve directement fixée par sa face tournée vers l'extrados contre cette partie d'extrados de la coque.

La particularité de cette structure assemblée constituée de la coque, du corps de remplissage et du longeron, réside dans la liaison directe d'une face du longeron, sur toute la longueur de ce dernier qui est incluse dans la coque, avec les tissus de revêtement de l'extrados, ce qui procure une liaison entre le longeron et le revêtement de meilleure qualité par un collage direct d'un élément sur l'autre par une grande surface, ce qui a pour conséquence une meilleure tenue à la force centrifuge, aux moments de flexion et au couple de torsion.

Afin d'assurer une bonne rigidité en torsion de l'ensemble de la pale, la coque est constituée par un empilement, de l'extérieur vers l'intérieur, d'au moins une couche de tissus de fibres de verre ou de Kevlar, mais de préférence de deux couches qui sont croisées et inclinées à 45° sur l'axe longitudinal de la pale, et d'au moins une couche de tissus de fibres de carbone, mais de préférence de deux couches également croisées et inclinées de manière analogue.

Avantageusement, la jonction, au bord de fuite, des tissus d'extrados et d'intrados formant la coque est renforcée par un étrier interne en tissus de fibres de carbone, collé par ses faces externes sur les faces internes des tissus de la coque.

Avantageusement, afin de simplifier la liaison de la pale au moyeu, la partie d'emplanture du longeron aménagée en boucle entoure une bobine d'attache de la pale par son extrémité opposée à la partie de longeron fixée dans la coupe.

Dans une forme particulièrement simple de réalisation, la lame allongée formant le longeron est constituée par un unique faisceau de stratifils qui est replié sur lui-même en deux moitiés égales dont les parties internes voisines de la zone de pliage, constituent la partie d'emplanture du longeron et dont les parties externes, éloignées de la zone de pliage, sont accolées l'une à l'autre et constituent la partie du longeron reçue dans la coque.

Le pied de la pale, qui est traversé par la partie d'emplanture du longeron, est de préférence réalisé avec des prolongements de la ou des couches de tissus de fibres constituant la coque et recouvrant un empilement de couches de tissus de fibres de renfort. Ce pied de pale est par exemple constitué d'un cylindre creux relié par son extrémité externe à la partie courante de la pale par une zone de transition et dont l'extrémité interne présente une forme tronconique, ce qui facilite la liaison de la pale par son pied à un organe de commande de l'incidence venant coiffeur le pied de pale.

L'invention a également pour objet un procédé de fabrication d'une telle pale, au moyen d'un demi-moule inférieur et d'un demi-moule supérieur dont les empreintes complémentaires ont respectivement la forme de la partie d'intrados et de la partie d'extrados de la pale.

Le procédé selon l'invention consistant à déposer dans le demi-moule inférieur un volet d'au moins une couche de tissus de fibres à haute résistance mécanique, imprégné d'une résine synthétique polymérisable et destiné à former la partie d'intrados de la coque de la pale, se caractérise en ce qu'il consiste de plus à mettre en place, par-dessus cette ou ces couches de tissus, un corps de remplissage préformé en une matière synthétique cellulaire ou en mousse présentant sur toute sa longueur une découpe qui s'ouvre dans la face du corps tournée vers l'extrados, à coiffer l'arête arrière de ce corps de remplissage avec un étrier préformé en tissus de fibres de carbone, à disposer dans la découpe une partie destinée à être fixée dans la coque d'une unique lame allongée de stratifils de fibres à haute résistance mécanique agglomérés par une résine synthétique polymerisable et destinée à constituer le longeron de la pale, et dont une partie d'extrémité, destinée à former une partie d'emplanture du longeron, est disposée au-delà d'une extrémité correspondante du corps de remplissage, à disposer sur l'ensemble ainsi formé dans le demi-moule inférieur, un volet d'au moins une couche de tissus de fibres à haute résistance mécanique imprégné de résine synthétique polymérisable et destiné à former la partie d'extrados de la coque de la pale, à installer de préférence une coiffe métallique au bord d'attaque dans le demi-moule inférieur, et enfin à placer le demi-moule supérieur sur le demi-moule inférieur et à polymériser la ou des résines imprégnant et/ou agglomérant les éléments enfermés dans le moule.

Dans une variante préférée de réalisation, qui permet de mouler et de polymériser dans un moule unique et en une seule opération la partie courante de la pale, la partie de longeron fixée dans cette partie courante de pale, et la partie d'emplanture du longeron, le procédé selon l'invention consiste à utiliser une unique résine synthétique thermodurcissable pour imprégner les volets de chacune des couches de tissus de fiores de la coque et de l'étrier de bord de fuite et pour agglomérer les stratifils de l'unique lame allongée du longeron, respectivement après avoir découpé chaque couche sous la forme d'une couche allongée comprenant deux volets adjacents de part et d'autre d'un axe médian longitudinal correspondant au bord d'attaque de la coque et destinés à former respectivement la partie d'intrados et la partie d'extrados de la coque, et après avoir étalé un unique faisceau de stratifils replié sur lui-même en deux moitiés égales, afin de former la lame unique du longeron, et le procédé selon l'invention consiste de plus à laisser le volet de la partie d'extrados de chaque couche à l'extérieur du même-moule inférieur lorsque le volet de la partie d'intrados de la couche correspondante est déposée dans l'empreinte du demi-moule inférieur, puis, après la mise en place du corps de remplissage, de l'étrier du bord de fuite et du faisceau de stratifils, à rabattre le volet de la partie d'extrados de chauqe couche sur ce corps et sur ce faisceau, avant l'installation de la coiffe du bord d'attaque, la fermeture du moule et un traitement thermique de polymérisation de la résine.

La présente invention sera mieux comprise à l'aide d'un exemple de réalisation décrit ci-après, à titre non limitatif, en référence aux figures annexées dans lesquelles:

— la figure 1 est une coupe horizontale de la partie arrière du fuselage d'un hélicoptère équipé d'un rotor anticouple, muni de pales selon l'invention,

— la figure 2 est une demi-coupe axiale, selon II-II de la figure 3, du rotor représenté sur la figure 1,

— la figure 3 est un quart de coupe radiale, selon III-III de la figure 2,

— la figure 4 est une coupe transversale d'une pale, selon IV-IV de la figure 3,

— la figure 4a est une vue à échelle agrandie, du bord de fuite de la pale de la figure 4, et

— les figures 5 à 7 illustrent le procédé de fabrication de chacune des pales selon la figure 4, équipant le rotor selon les figures 1 à 3.

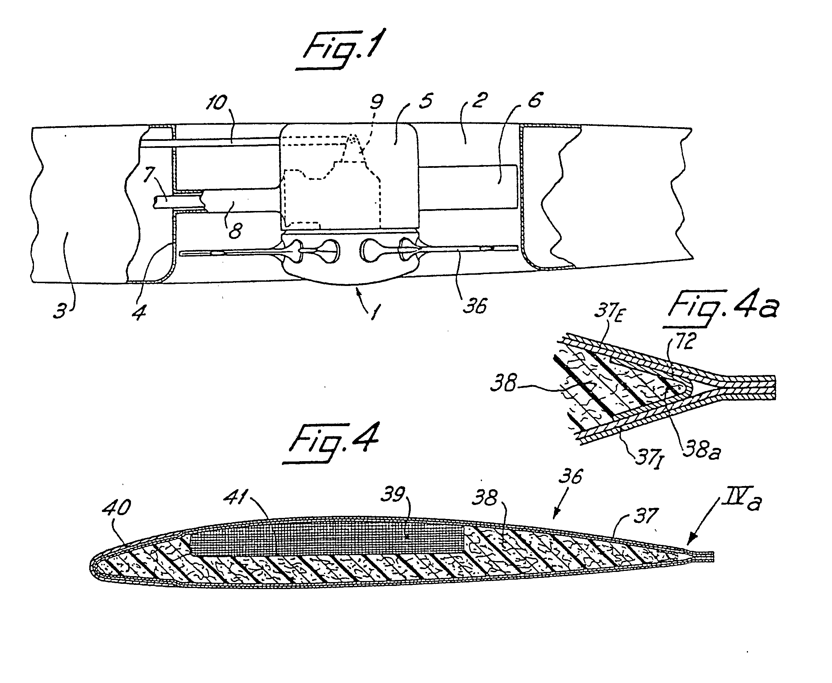

Sur la figure 1, le rotor multipale, utilisé comme rotor arrière anti-couple, compensant le couple moteur transmis à au moins un rotor principal par une boîte de transmission principale, et désigné dans son ensemble par 1, est monté et entraîné en rotation dans une veine ou fenêtre verticale 2, de forme légèrement tronconique, délimitée dans la partie arrière du fuselage ou empennage 3 d'un hélicoptère par un carénage 4. Dans la veine 2, le rotor 1 est supporté et entraîne par une boîte de transmission auxiliaire 5 logée dans un carter à double paroi, de forme généralement cylindrique, maintenu au centre de la veine 2 par un support comportant plusieurs bras radiaux carénés 6.

La boîte de transmission auxiliaire 5, qui est par exemple telle que celle décrite et représentée dans le brevet français 1 593 008, auquel on se reportera avantageusement pour plus de précisions, renferme un engrenage conique, dont le pignon primaire est entraîné par un arbre de transmission 7 reliant la boîte de transmission principale à la boîte de transmission auxiliaire 5, et traversant un brax creux 8 reliant le carénage 4 au carter de la boîte de transmission auxiliaire 5. Cette dernière renferme également un renvoi d'angle 9, sollicité par une bielle de commande collecitive de l'incidence 10 afin de déplacer parallèlement à l'axe de la veine 2 un arbre de commande collective d'incidence décrit ci-après. Le renvoi d'angle 9 et la bielle 10 ont été schématiquement représentés comme sur la figure 1 du brevet précité, dans un but de clarté, mais la bielle 10 peut éventuellement traverser également le bras creux 8.

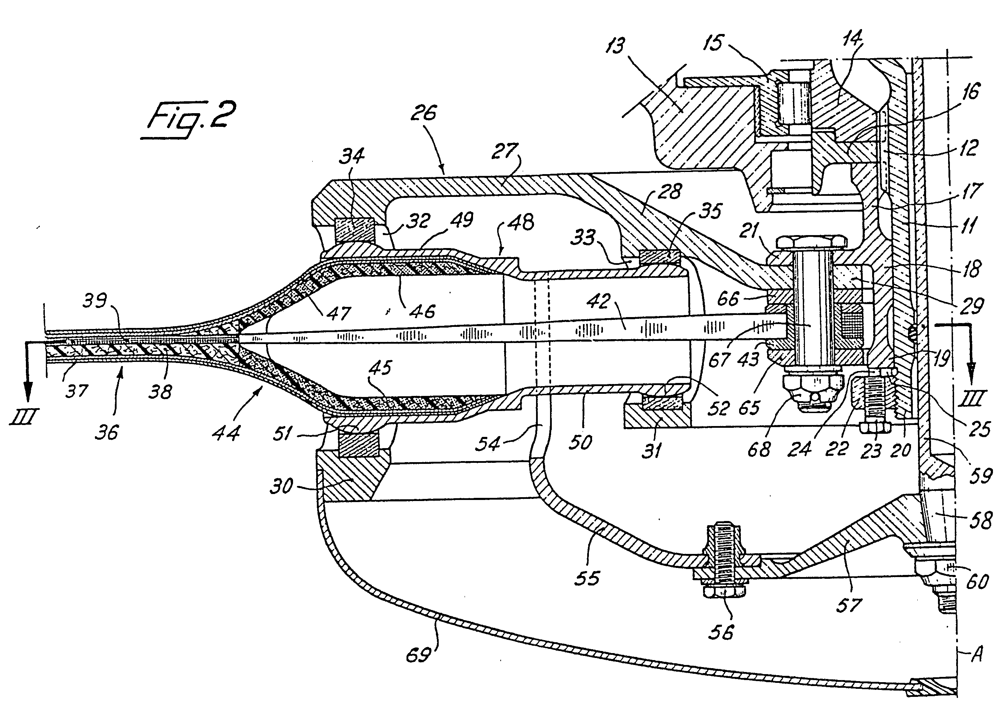

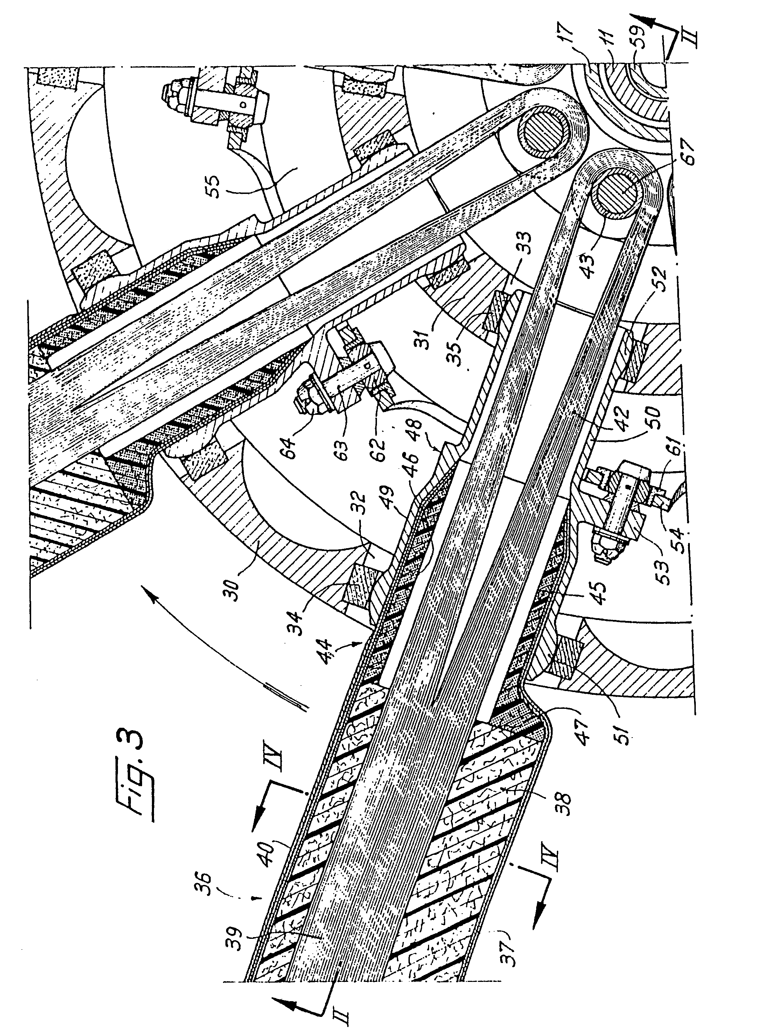

En référence aux figures 2 et 3, le rotor 1 comprend un arbre central tubulaire 11 coaxial à la veine 2, et monté en rotation autour de l'axe A de la veine 2 par des roulements logés dans la boîte de transmission auxiliaires 5. L'arbre 11 est entraîné en rotation par des cannelures axiales 12 d'une partie d'arbre traversant le carter 13 de la boîte de transmission auxiliaire 5, et qui sont en prises avec des cannelures correspondantes du pignon conique secondaire 14 de l'engrenage conique logé dans la boîte de transmission auxiliaire 5, ce pignon secondaire 14 étant lui-même monté en rotation dans le carter 13 par un roulement à rouleaux 15. Par ses cannelures 12 l'arbre 11 est également en prise avec des cannelures correspondantes de l'extrémité axiale interne (c'est-à-dire tournée vers la boîte de transmission auxiliaire 5) d'un manchon d'entraînement 17 qui est en appui axial par cette extrémité axiale interne contre un porte-joint 16, serré contre le pignon secondaire 14. Ce manchon 17, solidaire en rotation de l'arbre 11, est coaxial à ce dernier grâce à deux portées d'appui cylindriques internes 18 et 19 décalées axialement et telles que l'extrémité axiale externe filetée 20 de l'arbre 11 est en saillie par rapport à la portée cylindrique axiale externe 19 du manchon 17. Au niveau de sa portée axiale interne 18, ce manchon 17 présente une bride annulaire radiale externe 21, par laquelle le manchon 17 est fixé un moyeu décrit ci-après et auquel le manchon 17 transmet le couple moteur reçu de l'arbre 11, lequel le reçoit du pignon conique 14, et le manchon 17 reprend également une partie des efforts de poussée développés par la rotation des pales décrites ci-dessous. Le manchon 17 est maintenu axialement en place, en exerçant une force d'appui axiale prédéterminée contre le porte-joint 16, par une bague taraudée 22, vissée sur l'extrémité filetée 20 de l'arbre 11, et qui est traversée par quatre alésages axiaux régulièrment répartis sur la bague 22 et dans chacun desquels est vissée une vis de calage 23 dont l'extrémité de la tige, en forme de téton d'appui 24, est appliquée contre une surface d'appui du fond d'une encoche 25 ménagée dans la face d'extrémité axiale externe du manchon 17.

En appliquant un couple de serrage prédéterminé sur les têtes des quatre vis 23 qui prennent appui d'une part sur la bague 22 et d'autre part sur le manchon 17, on exerce facilement sur l'empilement axial constitué par le manchon 17, le porte-joint 16 et le pignon conique d'entraînement 14, une précontrainte axiale qui permet de reprendre les jeux axiaux et d'éviter les vibrations et la détérioration des éléments de cet empilement, les quatre vis 23 étant ensuite freinées simultanément.

Le moyeu a sensiblement la forme d'un moule à gâteau circulaire muni d'une cheminée centrale. Plus précisément, le moyeu comprend un corps de moyeu 26, en tôle emboutie ou en une matière synthétique injectée et éventuellement armée, ayant la forme d'une cuvette dont le fond est constitué d'une partie radiale externe plane 27 raccordée par une partie intermédiaire tronconique 28, dirigée vers l'intérieur de la cuvette, à une partie radiale interne annulaire et plane 29 entourant une ouverture centrale de diamètre légèrement supérieur au diamètre externe de la partie du manchon 17 située axialement à l'extérieur de la bride 21, de sorte que le corps de moyeu 26 peut être glissé axialement sur cette partie du manchon 17, jusqu'à venir reposer par la partie annulaire plane 29 contre la bride 21 du manchon 17. Le corps de moyeu 26 est également constitué de deux parois cylindriques coaxiales l'une à l'autre, dont l'une 30 en position radiale externe et se raccordant par son extrémité axiale interne à l'extrémité radiale externe de la partie 27 du fond, est d'une hauteur supérieure à celle de l'autre paroi cylindrique 31, en position radiale interne et se raccordant par son extrémité axiale interne à la partie tronconique 28 du fond. Dans ces deux parois 30 et 31 sont percées, pour chacune des pales que doit comporter le rotor, deux ouvertures circulaires 32 et 33 coaxiales centrées sur un axe radial, et telles que l'ouverture 32 dans la paroi externe 30 est d'un diamètre supérieur au diamètre de l'ouverture 33 dans la paroi interne 31. Deux bagues auto-lubrifiantes 34 et 35 sont logées respectivement dans des gorges annulaires ménagées dans la paroi des ouvertures 32 et 33, le diamètre interne de la bague 34 étant supérieur à celui de la bague 35.

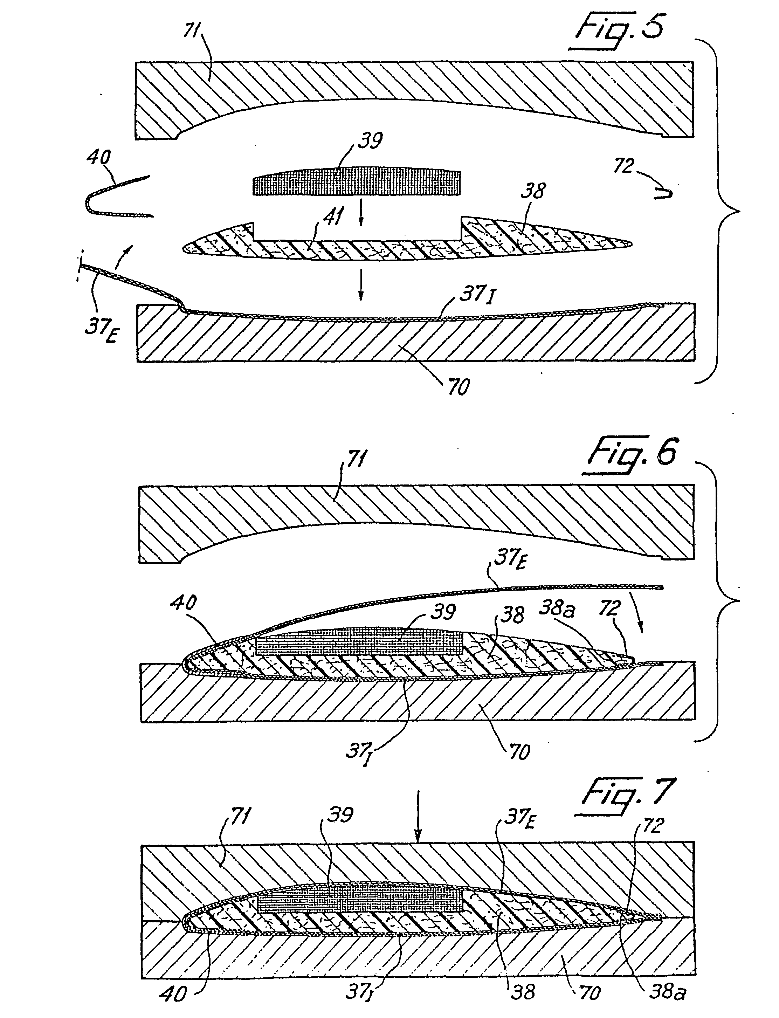

Le rotor comporte également onze pales 36 ayant chacune sensiblement 40 cm de longueur, 7,7 cm de largeur et une loi de vrillage d'environ 7°, et la structure de ces pales 36 est décrite ci-dessous en référence non seulement aux figures 2 et 3 mais également aux figures 4 et 4a.

Chaque pale 36 est essentiellement constituée, dans sa partie courante, d'une coque 37 ayant la forme du profile aérodynamique souhaité, d'un pain de remplissage préforme 38, d'un étrier de bord de fuite 72, d'un longeron 39 et d'une coiffe de bord d'attaque en titane ou en acier inoxydable 40.

La coque 37 est réalisée par un empilement constitué, en allant de l'extérieur vers l'intérieur, de deux couches superposées de tissus en fibres de verre ou de Kevlar (marque déposée) disposées de telle sorte que, par exemple, leurs fils de chaîne soient croisés à angle droit et inclinés à 45° sur l'axe longitudinal de la pale, et de deux couches de tissus en fibres de carbone, de préférence également croisées et inclinées à 45°, et l'ensemble de ces quatre couches est aggloméré par une résine synthétique polymérisée par thermodurcissage de façon à former un caisson creux assurant la rigidité en torsion de l'ensemble de la pale, dans laquelle le pain de remplissage 38 ne présente pas de tenue au cisaillement.

Ce pain de remplissage 38 est un élément de mousse ou de matière synthétique cellulaire, dont la forme externe correspond au volume interne de la coque 37 dans laquelle il est enfermé, et qui présente une découpe 41 de section sensiblement rectangulaire s'étendant sur toute sa longueur et s'ouvrant dans la face du pain 38 qui est tournée vers l'extrados de la pale 36.

Un étrier de renfort 72 préformé en V, constitué de tissus de fibres de carbone préimprégnés de résine synthétique, vient coiffer l'arête arrière 38a, côté bord de fuite de la pale 36, du pain de remplissage 38. Cet étrier 72 est collé par ses faces externes aux tissus constituant la coque 37 de la pale et par ses faces internes, au pain de remplissage 38. Cet étrier 72 est essentiellement destiné à assurer la tenue de la coque 37 au coupe de torsion et aux moments de traînée la sollicitant.

Le longeron 3 est une lame allongée pleine réalisé en stratifils de Kevlar agglomérés par une résine synthétique thermodurcie et ayant, sur les deux tiers environ de sa longueur qui sont reçus dans la partie courante de la pale 36, une section qui correspond à celle du logement délimité par la découpe 41 du pain de remplissage 38 et par la face inférieure de la partie en regard de l'extrados de la coque 37.

Le longeron 39 destiné à reprendre les efforts centrifuges sollicitant la pale 36 en service constitue, par son troisième tiers qui sort de la partie courante de la pale en traversant le pied de pale décrit ci-dessous, une partie d'emplanture 42 en forme de boucle (voir figure 2) et d'épaisseur croissante (voir figure 2) de la partie du longeron 39 reçue dans la partie courante de la pale 36 vers l'extrémité libre de la boucle, qui entoure une bobine métallique 43 formant l'attache de la pale 36, en étant enroulée dans une gorge autour de cette bobine 43.

Dans la partie courante de la pale 36, la particularité de l'assemblage de la coque 37, du pain de remplissage 38 et du longeron 39 réside dans la liaison directe de la face du longeron 39 qui n'est pas en regard de l'une des faces de la découpe 41 du pain de remplissage 38 avec la face intérieure de la couche intérieure des tissus de revêtement de la partie d'extrados de la coque 37, sur toute la longueur du longeron 39 qui est reçue dans la partie courante de la pale 36, c'est-à-dire sur les deux tiers externes environ de la longueur du longeron 39.

Cette particularité de structure de la pale 36 présente le double intérêt de procurer une liaison d'excellente qualité entre le longeron 39 et la coque 37 par un collage direct d'un élément sur l'autre sur une grande surface, ce qui engendre une meilleure tenue à la force centrifuge, aux moments de flexion et au couple de torsion qui sollicitent la pale, et de faciliter la fabrication de la pale 36 selon un procédé qui sera ultérieurement décrit.

Chaque pale 36 comporte en outre un pied de pale 44, réalisé avec les couches de tissus de fibres du revêtement ou de la coque 37 et avec des couches de tissus de fibres de renfort 45, afin de donner au pied de pale 44 une épaisseur suiffisante. Ce pied de pale 44 comporte un cylindre creux 46, dont l'extrémité radiale interne se rétrécit en tronc de cône, et qui est relié par son extrémité radiale externe à la partie courante de la pale 36 par une zone de transition 47 s'étendant sur une longueur voisine de la corde de la pale 36. Le pied de pale 44 est monté par son cylindre creux 46 dans un palier constitué par un manchon métallique 48 en alliage d'aluminium.

Ce manchon 48 comprend deux parties tubulaires 49 et 50 coaxiales, de section circulaire ayant des diamètres interne et externe différents, et dont les alésages cylindriques sont reliés par une partie tronconique. Le cylindre creux 46 du pied de pale 44 et son extrémité radiale interne tronconique sont coiffés respectivement par la partie tubulaire de plus grand diamètre interne et externe 49 et par la partie tronconique du manchon 48, et sont fixés respectivement à ces deux parties par collage. Cette forme du manchon 48 favorise l'appui de ce dernier contre le cylindre creux 46 du pied de pale 44 sous l'effet de la force centrifuge.

Autour de son extrémité radiale interne, tournée vers l'arbre 11 du rotor, la partie de plus petit diamètre interne et externe 50 du manchon 48 présente une collerette 52 de forme sphéroïde dont le diamètre maximum externe correspond au diamètre interne de la bague auto-lubrifiante 35 logée dans l'ouverture 33 de la paroi interne 31 du moyeu 26. De manière analogue, une collerette 51, également de forme sphéroïde, et dont le dimètre maximum externe correspond au diamètre interne de la bague auto-lubrifiante 34 logée dans l'ouverture 32 de la paroi externe 30 du moyeu 26, est présentée par la partie de plus grand diamètre interne et externe 49 du manchon 48, autour de son extrémité radiale externe, c'est-à-dire dans la position de plus grand écartement vis-à-vis de la collerette 52 sur le manchon 48.

Ce dernier comporte également un bossage latéral 53, rattaché à la partie tronconique du manchon 48, entre les deux collerettes 51 et 52, et s'étendant dans une direction sensiblement perpendiculaire à l'axe du manchon 48 ainsi qu'à l'axe A de rotation du rotor.

Les dimensions et l'encombrement du manchon 48 et de son bossage latéral 53 sont tels qu'en inclinant convenablement une pale 36 et son manchon 48 après avoir introduit l'extrémité radiale interne de la boucle de la partie d'emplanture 42 et la bobine métallique 43 ainsi que la partie 50 du manchon 48 dans une ouverture 32 de la paroi externe 30 du moyeu, il est possible de faire passer le bossage latéral 53 dans cette ouverture 32, puis d'engager la partie 50 du manchon 48 dans l'ouverture 33 correspondante et de positionner les parties 49 et 50 de telle sorte que les collerettes 51 et 52 viennent respectivement en appui à l'intérieur des bagues 34 et 35 des ouvertures 32 et 33.

Dans cette position de la pale 36, le bossage 53 est en regard de l'une de plusiers pattes axiales 54, en nombre égal au nombre des pales 36 du rotor, et dont l'extrémité axiale externe est solidaire d'un plateau de commande 55 annulaire et bombé. Par une couronne d'ensemble vis-écrou 56, le bord radial interne du plateau de commande 55 est superposé et solidarisé au bord radial externe d'un flasque 57 de forme tronconique, afin de présenter une excellente rigidité, et qui est monté par emmanchement conique de sa partie centrale sur une fusée conique 58 d'un arbre de commande collective de pas 59 monté coulissant axialement dans l'arbre tubulaire de rotor 11, le flasque 57 étant retenu sur l'arbre de commande de pas 59 par un écrou à collerette d'appui 60 vissé sur l'extrémité axiale externe filetée de la fusée 58.

Chacune des pattes axiales 54 du plateau 55 est percée d'un alésage équipé d'une bague 61 dans laquelle est reçue une rotule 62 retenue par une goupille transversale sur la tige et contre la tête d'un goujon à tête 63, dont l'extrémité filetée de la tige traverse un perçage du bossage 53 et reçoit un écrou 64 goupillé sur la tige en position vissée.

Chaque bossage 53 constitue avec le goujon 63, l'écrou 64, la rotule 62 et la patte 54 qui lui correspondent, un levier de commande du pas de la pale 36 dont le pied 44 est solidaire du manchon 48 correspondant. Les diffférents leviers de commande de pas ainsi constitués, le plateau de commande 55, le flasque 57 et l'arbre de commande collective de pas 59 constituent un ensemble de commande collective du pas des pales 36 du rotor, tel que tout déplacement axial de l'arbre 59 dans l'arbre tubulaire 11 commande, par l'intermédiaire des leviers de commande de pas, l'application d'un couple de torsion sur les manchons 48, et donc également sur les pieds de pale 44 et les pales 36 autour des axes longitudinaux de ces dernières. Ce couple de torsion provoque la rotation de manchons 48 et donc aussi des pales 36 autour des axes longitudinaux de ces dernières en entraînant une torsion de la partie d'emplanture 42 du longeron 39. Chaque levier de commande de pas est situé entre les deux collerettes 51 et 52 du manchon de palier correspondant, lesquelles sont écartées au maximum l'une de l'autre, ce qui permet d'assurer un meilleur appui de chaque pale 36 et de réduire les efforts radiaux exercés par les collerettes 51 et 52 sur les bagues auto-lubrifiantes 34 et 35 correspondantes.

Enfin, lorsque chaque pale 36 est convenablement disposée dans le moyeu 26 de sorte que les collerettes 51 à 52 du manchon de palier 48 correspondant sont en appui à l'intérieur des bagues 34 et 35 des ouvertures 32 et 33 correspondantes, la bobine métallique 43 de l'extrémité radiale interne de la partie d'emplanture 42 en forme de boucle du longeron 39 et reçue entre deux couronnes métalliques 65 et 6 engagées autour du manchon d'entraînement 17, et par un unique goujon 67, dont la tige traverse des perçages alignés de la bride 21 du manchon 17, de la partie centrale 29 du corps de moyeu 26 et des couronnes 65 et 66, ainsi que le passage central de la bobine 43, et sur l'extrémité filetée de laquelle est vissé en écrou 68 goupillé, on assure la solidarisation de cette bobine 43 au corps de moyeu 26 et à la bride 21 du manchon d'entraînement 17, les couronnes métalliques 65 et 66 de part et d'autre de la bobine 43 assurant la répartition des efforts centrifuges d'une bobine d'attache 43 à l'autre.

Enfin, un capot bombé 69, fixé, par exemple par des vis, par son bord radial externe sur la périphérie de la paroi radiale externe 30 du corps de moyeu 26, recouvre l'ensemble de commande collective de pas des pales 36 et protège le moyeu contre la pénétration de poussières, de cailloux, etc.

Dans cette réalisation, on constate que la partie centrale 29 du corps de moyeu 26 travaille peu et ne sert qu'à la transmission du couple moteur du manchon d'entraînement 17 aux pales 36, afin de faire tourner ces dernières. Cependant, le corps de moyeu 26 reprend une partie des efforts de flexion. Ceci est obtenu grâce à la disposition favorable des collettes d'appui 51 et 52 des manchons de palier 48. De plus, les couronnes 65 et 66 de répartition des efforts centrifuges évitent toute sollicitation importante du manchon d'entraînement 17 et empêchent de faire travailler les goujons de fixation en flexion.

Cette réalisation permet un montage et un démontage aisés des différents composants du rotor multipale, ce qui facilite considérablement les opérations d'entretien et diminue le coût de la maintenance. En particulier, il est aisé de procéder au changement d'une pale 36 endommagée sans avoir à démonter d'autres éléments, puisqu'il suffit de désaccoupler le bossage 53 correspondant du goujon 63 en dévissant l'écrou 64 et de désaccoupler la bobine 43 correspondante du goujon 67 en dévissant l'écrou 68. A cet effet, le flasque 57 peut être ajouré afin de permettre l'accès à l'écrou 68 sans avoir à démonter le flasque 57 et le plateau 55 de l'arbre 59, après désaccouplement des bossages 53 de toutes les pales 36.

En référence aux figures 5 à 7, on va maintenant décrire un procédé de fabrication d'une pale telle que 36, dont la structure a été décrite en référence aux figures 2 à 4, et qui est destinée non seulement à l'équipement d'une hélice multipale telle que celle décrite précédemment et utilisée comme rotor arrière d'hélicoptère, mais également à l'équipement de ventilateurs ou de soufflantes, notamment pour souffleries et dispositifs de climatisation ou d'échanges thermiques gazeux.

Ce procédé est mis en œuvre à l'aide de deux demi-moules complémentaires dont l'un 70 inférieur présente une empreinte interne dont la forme correspond transversalement et longitudinalement à la forme de l'intrados de la pale 36, et dont l'autre 71 supérieur présente une empreinte interne dont la forme correspond dans les mêmes conditions à celle de l'extrados de la pale.

On découpe tout d'abord deux couches allongées de tissus de fibres de verre ou de Kevlar, puis deux couches allongées de tissus de fibres de carbone, chaque couche comprenant deux volets 37I et 37E adjacents, de part et d'autre d'un axe médian longitudinal correspondant au bord d'attaque de la coupe 37 et destinés à former respectivement la partie d'intrados et la partie d'extrados de la coque 37. Ces couches de tissus sont pré-imprégnées d'une résine synthétique polymérisable par exemple thermodurcissable. On dépose ensuite dans l'empreinte du demi-moule inférieur 70 les volets 37I des deux couches de tissus en fibres de verre ou de Kevlar en laissant les volets 37E de ces deux couches à l'extérieur du demi-moule inférieur 70, du côté du bord d'attaque, puis on dépose de la même manière sur ces deux couches, les deux couches de tissus de fibres de carbone, de sorte que tous les volets 37I des quatre couches de tissus de fibres formant la coque 37 sont empilés dans le demi-moule inférieur 70, comme représenté sur la figure 5. On place ensuite sur cet empilement des volets 37I le pain préformé 38 de matière cellulaire ou en mousse de remplissage, dont la découpe 41 s'ouvre vers le haut. La fabrication de ce pain 38 à la forme convenable dans un second moule aménagé à cet effet ne pose aucune difficulté et ne mérite pas d'explication complémentaire. On met en place sur l'arête arrière 38a du pain de remplissage 38, l'étrier de renfort 72 constitué de tissus de fibres de carbone préimprégnés de résine synthétique et préformé en V dans un outillage séparé. Puis on dépose, dans la découpe 41 du pain 38 préformé et en position dans le demi-moule inférieur 70, le longeron 39 constitué par une lame allongée dont une partie d'extrémité est conformée en boucle. La fabrication de lames allongées de ce genre, destinées en particulier à constituer les âmes des pales de rotor de giravion est bien connu, si bien qu'il n'est pas nécessaire de la décrire en détail; il suffit de préciser que des lames de ce genre peuvent être constituées non seulement avec des stratifils en fibres de Kevlar, mais également avec des stratifils en fibres de verre ou encore en fibres de carbone. Tous ces stratifils peuvent être agglomérés par exemple en imprégnant le faisceau qu'ils forment avec une résine polymérisable, notamment thermodurcissable. Ce procédé connu permet de réaliser en particulier des lames allongées minces et relativement étroites qui présentent des propriétés mécaniques particulièrement avantageuses pour la réalisation des âmes des pales des rotors de giravion: elles combinent en effet une grande résistance mécanique dans la direction longitudinale, leur permettant d'encaisser les forces centrifuges appliquées aux pales dont elles constituent les longerons, sans contrainte ni fatigue excessives, avec une relative souplesse, en particulier en torsion autour de leur axe longitudinal, ce qui permet de commander les incidences respectives des pales en exerçant sur les lames allongées des couples de torsion centrés sur leur axe longitudinal, et de valeur relativement faible.

Dans cet exemple précis, le longeron 39 est constitué par un unique faisceau allongé de stratifils qui est replié sur lui-même au milieu de sa longueur et dont les deux parties d'extrémité s'étandant sur environ les deux tiers de chaque moitié de faisceau sont accolées afin de constituer la portion du longeron destinée à s'étendre dans la partie courante de la pale 38, tandis que la partie médiane du faisceau, s'étendant sur environ un tiers de chaque moitié de part et d'autre du milieu de la longueur du faisceau est destinée à constituer la portion d'emplanture 42 en forme de boucle torsible et flexible, après repli de faisceau en deux moitiés égales sur lui-même. Le faisceau de stratifils imprégnés de résine thermodurcissable est donc étalé de la sorte dans la découpe 41 du pain de remplissage 38, puis les volets 37E des couches de tissus de fibres de revêtement sont rabattus par-dessus le pain 38 et le faisceau de stratifils, et la coiffe 40 en tôle de titane ou d'acier inoxydable est ensuite installé sur le bord d'attaque, comme cela est représenté sur la figure 6. Puis comme représenté sur la figure 7, le demi-moule supérieur 71 est placé sur le demi-moule inférieur 70 et l'ensemble de leur contenu est polymérisé par traitement thermique, ce qui assure l'intégration de la coiffe de bord d'attaque 40 aux tissus de la coque rigidifiée et qui adhère par toute sa surface interne soit sur le pain 38, soit au niveau des volets 37E de la partie d'extrados directement sur le longeron 39, dont les stratifils sont agglomérés.

La zone de transition 47 et le cylindre creux 46 du pied de pale 44 peuvent être réalisés simultanément grâce à des évidements longitudinaux de forme complémentaire ménagés dans la partie des demi-moules correspondant au pied de pale et dans lesquels est disposé un mandrin creux, traversé par la portion du faisceau de stratifils constituant l'emplanture 42 en forme de boucle. Ce mandrin, entouré des couches de tissus de fibres de renfort 45 est disposé dans l'évidement du demi-moule inférieur 70 par-dessus des parties des couches de tissus de revêtement prolongeant les volets 37l préalablement disposé dans l'empreinte de ce demi-moule 70. Lors du rabattement des volets 37E, des parties de couches de revêtements prolongeant ces derniers sont rabattues par-dessus le mandrin et les couches de renfort 45. On obtient ainsi que la partie courante de la pale 36, la portion correspondant du longeron 39, le pied de bale 44 et la portion d'emplanture 42 en forme de boucle torsible et flexible du longeron, sont moulés et polymérisés dans un moule unique et par un seul traitement thermique.

Afin de faciliter la disposition en boucle de la partie centrale du faisceau de stratifils repliée sur elle-même, on peut prévoir dans le demi-moule inférieur 70 un élément en forme de coin, autour duquel est étalé le faisceau de stratifils. Dans sa partie centrale, ce dernier présente une épaisseur progressivement croissante vers le milieu de sa longueur, comme cela est représenté sur la figure 2. De même il peut présenter une largeur légèrement et progressivement décroissante de chacune de ses deux extrémités vers sa partie centrale, de sorte que la portion du longeron 39 logée dans la partie courante de la pale 36 s'élargisse vers son extrémité radiale externe, et s'oppose ainsi à l'arrachement par la force centrifuge du pain de remplissage 38 et de la coque 37.

**Revendications**

1. Pale destinée à l'équipement d'une hélice multipale, et en particulier d'une hélice utilisable comme rotor arrière d'un giravion, comprenant:
   — une coque (37) à profil aérodynamique, constituée d'au moins une couche de tissus de fibres à haute résistance mécanique rigidifiée par une résine synthétique d'imprégnation polymérisée et,
   — un corps de remplissage (38) en une matière synthétique cellulaire ou en mousse, et disposé dans la coque (37) et,
   — un longeron (39), d'axe longitudinal sensiblement parallèle à celui de la pale (36) et constitué par une unique lame allongée de stratifils de fibres à haute résistance mécanique agglomérés par une résine synthétique polymérisée, dont la plus grande partie est fixée dans la coupe (37), et dont une partie d'extrémité, sortant de la coque (37), forme une partie d'emplanture (42) torsible et flexible par laquelle le longeron (39) est destiné à être rattaché à un moyeu (26), et
   — de préférence, une coiffe métallique (40) de bord d'attaque, intégrée dans la coque (37), caractérisée en ce que le corps de remplissage (38) préformé comporte une découpe (41) qui s'étend sur toute sa longueur, s'ouvre dans la face du corps (38) tournée vers la partie d'extrados de la coque (37) et dont la section correspond sensiblement à celle du longeron (39) dans sa partie fixée dans la coque (37), et en ce que la partie du longeron (39) qui est fixée dans la coque (37) est disposée dans le logement délimité par la découpe (41) du corps de remplissage (38) et la partie d'extrados en regard de la coque (37) et est directement fixée par sa face tournée vers l'extrados contre cette partie d'extrados de la coque (37).

2. Pale selon la revendication 1, caractérisée en ce que la coque (37) est constituée par un empilement, de l'extérieur vers l'intérieur, d'au moins une couche de tissus de fibres de verre ou de Kevlar, mais de préférence de deux couches croisées et inclinées à 45° sur l'axe longitudinal de la pale (36), et d'au moins une couche de tissus de fibres de carbone, mais de préférence de deux couches croisées et inclinées de manière analogue.

3. Pale selon l'une des revendications 1 et 2, caractérisée en ce qu'un étrier de renfort (72), constitué avec des tissus en fibres de carbone préimprégnés de résine synthétique, coiffe l'arête arrière (38a) du corps de remplissage (38) sur laquelle il est collé par ses faces internes alors que ses faces externes sont solidarisées par collage à la face interne des tissus constituant la coque (37).

4. Pale selon l'une des revendications 1 à 3, caractérisée en ce que la partie d'emplanture (42) du longeron (39) est aménagée en boucle dont l'extrémité opposée à la partie de longeron (39) fixée dans la coque (37) entoure une bobine d'attache (43) de la pale (36) à un moyeu (26).

5. Pale selon l'une des revendications 1 à 4, caractérisée en ce que la lame allongée formant le longeron (39) est constituée par un unique faisceau de stratifils qui est replié sur lui-même en deux moitiés égales dont les parties internes, voisines de la zone de pliage, constituent la partie d'emplanture (42) du longeron (39), et dont les parties externes, éloignées de la zone de pliage, sont accolées l'une à l'autre et constituent la partie du longeron (39) reçue dans la coque (37).

6. Pale selon l'une des revendications 1 à 5, caractérisée en ce qu'elle comprend un pied de pale (44), traversé par la partie d'emplanture (42) du longeron (39), réalisé avec des prolongements de la ou des couches de tissus de fibres constituant la coque (37) et recouvrant un empilement de couches de tissus de fibres de renfort (45).

7. Pale selon la revendication 6, caractérisée en ce que le pied de pale (44) est constitué d'un cylindre creux (46) relié par son extrémité externe à la partie courante de la pale (36) par une zone de transition (47) et dont l'extrémité interne a une forme tronconique.

8. Procédé de fabrication d'une pale selon l'une des revendications 1 à 7, au moyen d'un demi-moule inférieur (70) et d'un demi-moule supérieur (71), dont les empreintes complémentaires ont respectivement la forme de la partie d'intrados et de la partie d'extrados de la pale (36), consistant à déposer dans le demi-moule inférieur (70), un volet (37l) d'au moins une couche de tissus de fibres à haute résistance mécanique imprégné d'une résine synthétique polymérisable et destiné à former la partie d'intrados de la coque (37) de la pale, caractérisé en ce qu'il consiste de plus

— à mettre en place, par-dessus cette ou ces couches de tissus, un corps de remplissage (38) préformé en une matière synthétique cellulaire ou en mousse, présentant sur toute sa longueur une découpe (41) qui s'ouvre dans la face du corps tournée vers l'extrados,

— à mettre en place sur l'arête arrière (38a) du corps de remplissage (38) un étrier (72) constitué par des tissus de fibres de carbone préimprégnées de résine synthétique et préformé dans un outillage séparé,

— à disposer dans la découpe (41) une partie destinée à être fixée dans la coque (37) d'une unique lame allongée de stratifils de fibres à haute résistance mécanique agglomérés par une résine synthétique polymérisable et destinée à constituer le longeron (39) de la pale (36), et dont une partie d'extrémité, destinée à former une partie d'emplanture (42) du longeron (39), est disposée au-delà d'une extrémité correspondante du corps de remplissage (38),

— à disposer sur l'ensemble ainsi formé dans le demi-moule inférieur (70) un volet (37 E) d'au moins une couche de tissus de fibres à haute résistance mécanique imprégné de résine synthétique polymérisable et destiné à former la partie d'extrados de la coque (37),

— à installer de préférence une coiffe métallique (40) au bord d'attaque dans le demi-moule inférieur (70), et enfin

— à placer le demi-moule supérieur (71) sur le demi-moule inférieur (70) et à polymériser la ou les résines impégnant et/ou agglomérant les éléments renfermés dans le moule.

9. Procédé selon la revendication 8, caractérisé en ce qu'il consiste à utiliser une unique résine synthétique thermodurcissable pour imprégner les volets (37 I et 37 E) et l'étrier de renfort (72) de chacune des couches de tissus de fibres de la coque (37) et pour agglomérer les stratifils de l'unique lame allongée du longeron (39), respectivement après avoir découpé chaque couche sous la forme d'une couche allongée comprenant deux volets adjacents (37 I, 37 E) de part et d'autre d'un axe médian longitudinal correspondant au bord d'attaque de la coque (37) et destinés à former respectivement la partie d'intrados et la partie d'extrados de la coque (37), et après avoir étalé un unique faisceau de stratifils replié sur lui-même en deux moitiés égales afin de former la lame unique du longeron (39), et en ce qu'il consiste à laisser le volet (37 E) de la partie d'extrados de chaque couche à l'extérieur du demi-moule inférieur (70) lorsque le volet (37 I) de la partie d'intrados de la couche correspondante est déposée dans l'empreinte du demi-moule inférieur (70), puis, après mise en place du corps de remplissage (38) et de l'étrier de renfort (72) et du faisceau stratifils, à rabattre le volet (37 E) de la partie d'extrados de chaque couche sur ce corps (38) et ce faisceau avant l'installation de la coiffe (40) de bord d'attaque, la fermeture du moule, et un traitement thermique de polymérisation de la résine.

**Patentansprüche**

1. Rotorblatt zur Bestückung einer Mehrflügelluftschraube und insbesondere eine Luftschraube, die als Heckrotor eines Drehflügels verwendbar ist, mit:

— einer Schale (37) mit stromlinienförmigem Profil, die aus mindestens einer Gewebeschicht aus Fasern hoher mechanischer Festigkeit besteht, die durch ein polymerisiertes Imprägnierungskunstharz versteift ist; und

— einem Füllkörper (38) aus einem synthetischen zellenförmigen oder geschäumten Material, der in der Schale (37) angeordnet ist; und

— einem Längsträger (39) mit einer Längsachse, die im wesentlichen parallel zu jener des Rotorblattes (37) ist, und die durch eine einzelne, längliche Platte aus Schichtungen von Fasern mit hoher mechanischer Festigkeit gebildet wird, die durch ein polymerisiertes Kunstharz agglomeriert werden, und deren grösster Teil in der Schale (37) befestigt ist, und deren Endteil, der aus der Schale (37) heraustritt, einen auf Drehung und Biegung beanspruchbaren Einsteckabschnitt (42) bildet, mittels welchem der Längsträger (39) dazu bestimmt ist, an einer Nabe (26) befestigt zu werden; und

— vorzugsweise einer metallischen Abdeckung (40) der Vorderkante, die in die Schale (37) integriert ist;

dadurch gekennzeichnet, dass der vorgeformte Füllkörper (38) einen Zuschnitt (41) aufweist, der sich über seine gesamte Länge erstreckt und sich in der Seite des Füllkörpers (38) öffnet, die dem Saugseitenabschnitt der Schale (37) zugewandt ist, und dessen Querschnitt im wesentlichen jener des Längsträgers (39) und seinem in der Schale (37) befestigten Abschnitt entspricht, und dass der Abschnitt des Längssträgers (39), der in der Schale (37) befestigt ist, in der Ausnehmung angeordnet ist, die durch den Zuschnitt (41) des Füllkörpers (38) und dem gegenüberliegenden Saugseitenabschnitt der Schale (37) begrenzt wird, und unmittelbar über seine gegen die Saugseite gerichtete Seite gegen den Saugseitenabschnitt der Schale (37) befestigt wird.

2. Rotorblatt nach Anspruch 1, dadurch gekennzeichnet, dass die Schale (37) durch eine Schichtung gebildet wird, die, von aussen nach innen, aus mindestens einer Gewebeschicht aus Glasfenstern oder Kevlar-Fasern besteht und vorzugsweise aus zwei gekreuzten Schichten, die gegenüber der Längsachse des Rotorblattes (36) um 45° geneigt sind, und aus mindestens einer Gewebeschicht aus Kohlenstoffasern, und vorzugsweise aus zwei gekreuzten und in analoger Weise geneigt verlaufenden Schichten.

3. Rotorblatt nach einem der Ansprüche 1 und 2, dadurch gekennzeichnet, dass ein Verstärkungsbügel (72), der aus mit Kunstharz vorimprägniertem Kohlenstoffasergewebe besteht, die Hinterkante (38a) des Füllkörpers (38) abdeckt, auf welcher er mit seinen Innenseiten verklebt ist, während seine Aussenseiten durch Verkleben mit der Innenseite der Gewebe fest verbunden sind, die die Schale (37) bilden.

4. Rotorblatt nach den Ansprüchen 1 bis 3, dadurch gekennzeichnet, dass der Einsteckabschnitt (42) des Längsträgers (39) als Schleife ausgebildet ist, deren Ende, das dem in der Schale (37) befestigten Abschnitt des Längsträgers (39) abgewandt ist, eine Haspel (43) zur Befestigung des Rotorblattes (36) an einer Nabe (26) umgibt.

5. Rotorblatt nach einen der Ansprüche 1 bis 4, dadurch gekennzeichnet, dass die längliche den Längsträger (39) bildende Platte aus einem einzelnen Strang geschichteter Fasern besteht, der auf sich selbst in zwei gleichen Hälften umgebogen ist, deren der Biegungszone benachbarte Innenabschnitte den Einsteckabschnitt (42) des Längsträgers (39) bilden, und deren von der Biegungszone entfernte, äussere Abschnitte miteinander verklebt sind und den Abschnitt des Längsträgers (39) bilden, der in der Schale (37) aufgenommen wird.

6. Rotorblatt nach einem der Ansprüche 1 bis 5, dadurch gekennzeichnet, dass es einen Rotorblattfuss (44) umfasst, durch den der Einsteckabschnitt (42) des Längsträgers (39) hindurchtritt, und der mit den Verlängerungen der Fasergewebeschicht oder der Fasergewebeschichten gefertigt wird, die die Schale (37) bilden, und die einen Stapel Gewebeschichten aus Verstärkungsfasern (45) abdecken.

7. Rotorblatt nach Anspruch 6, dadurch gekennzeichnet, dass der Blattfuss (44) aus einem Hohlzylinder (46) gebildet wird, der über sein Aussenende mit dem laufenden Abschnitt des Rotorblattes über eine Übergangszone (47) verbunden wird und dessen Innenende eine Kegelstumpfform aufweist.

8. Verfahren zur Herstellung eines Rotorblattes nach einem der Ansprüche 1 bis 7, mittels einer unteren Halbform (70) und einer oberen Halbform (71), deren komplementäre Abdrücke jeweils die Form des Druckseitenabschnittes und des Saugseitenabschnittes des Rotorblattes (36) haben, gemäss welchem in der unteren Halbform (70) ein Flügel (37 I) aus mindestens einer Gewebeschicht aus Fasern hoher mechanischer Festigkeit angeordnet wird, die mit einem polymerisierbaren Kunstharz imprägniert ist und dazu dient, den Druckseitenabschnitt der Schale (37) des Rotorblattes zu bilden, dadurch gekennzeichnet, dass das Verfahren ferner umfasst:

— über dieser Gewebeschicht oder diesen Gewebeschichten einen Füllkörper (38) anzuordnen, der aus geschäumtem oder zellenförmigen Kunststoff vorgeformt ist und der über seine gesamte Länge einen Zuschnitt (41) aufweist, der sich in der gegen den Saugseitenabschnitt des Körpers gerichteten Seite öffnet;

— auf der Hinterkante (38a) des Füllkörpers (38) einen Bügel (72) anzuordnen, der durch Gewebe aus Kohlenstoffasern gebildet wird, die mit Kunstharz vorimprägniert und in einer getrennten Vorrichtung vorgeformt sind;

— im Zuschnitt (41) einen Abschnitt anzuordnen, der dazu dient, in der Schale (37) eine längliche Einzelplatte aus Schichtungen von Fasern mit hoher mechanischer Festigkeit anzuordnen, die durch ein polymerisierbares Kunstharz agglomeriert sind und dazu dienen, den Längsträger (39) des Rotorblattes (36) zu bilden, von welchem ein Endabschnitt, der dazu dient, einen Einsteckabschnitt (42) des Längsträgers (39) zu bilden, jenseits eines zugeordneten Endes des Füllkörpers (38) angeordnet ist;

— auf der in dieser Weise gebildeten Anordnung in der unteren Halbform (70) einen Flügel (37 E) aus mindestens einer Gewebeschicht aus Fasern hoher mechanischer Festigkeit, die mit polymerisierbarem Kunstharz imprägniert sind, anzuordnen, der dazu dient, den Saugseitenabschnitt der Schale (37) zu bilden;

— an der Vorderkante in der unteren Halbform (70) vorzugsweise eine metallische Abdeckung (40) anzuordnen; und schliesslich

— die obere Halbform (71) über die untere Halbform (70) zu legen und das Harz oder die Harze zu polymerisieren, die die in der Form eingeschlossenen Elemente imprägnieren und/oder agglomerieren.

9. Verfahren nach Anspruch 8, dadurch gekennzeichnet, dass es darin besteht, ein einzelnes, hitzehärtbares Kunstharz zur Imprägnierung der Flügel (37 I, 37 E) und des Verhältnisbügels (72) von jeder Fasergewebeschicht der Schale (37) zu verwenden, sowie zur Agglomeration der Faserschichten der länglichen Einzelplatte des Längsträgers (39), nachdem jeweils jede Schicht in Form einer länglichen Schicht zugeschnitten wurde, die zwei anliegende Flügel (37 I, 37 E) beiderseits einer Längsmittelachse umfasst, die der Vorderkante der Schale (37) entspricht und die dazu dienen, jeweils den Druckseitenabschnitt und den Saugseitenabschnitt der Schale (37) darzustellen, und nachdem ein einzelner Strang Faserschichten ausgelegt wurde, der um sich selbst in zwei gleichen Hälften umgelegt ist, um die Einzelplatte des Längsträgers (39) zu bilden, und das Verfahren ferner darin besteht, den Flügel (37 E) des Saugseitenabschnittes jeder Schicht ausserhalb der unteren Halbform (70) zu lassen, wenn der Flügel (37 I) des Druckseitenabschnittes der zugeordneten Schicht im Abdruck der unteren Halbform (70) angeordnet wird, wonach, nachdem der Füllkörper (38) und der Verstärkungsbügel (72) sowie der Strang der Faserschichtungen an ihrem Platz angebracht wurden, der Flügel (37 E) des Saugseitenabschnittes einer jeden Schicht auf den Füllkörper und den Strang von der Montage der Abdeckung (40) der Vorderkante niedergedrückt wird, das Schliessen der Form erfolgt, und eine Wärmebehandlung zur Polymerisation des Harzes.

**Claims**

1. Blade intended for equipping a multi-blade screw-propeller, and in particular for a screw-propeller that can be used as tail rotor for a rotary wing aircraft, comprising:
— a shell (37) of aerodynamic profile, consisting of at least one layer of high mechanical strength fibre cloth stiffened with a synthetic polymerised impregnating resin, and
— a filler body (38) made of a synthetic cellular or foam material and arranged in the shell (37), and
— a spar (39), having a longitudinal axis substantially parallel to that of the blade (36) and consisting of a single elongate ply of high mechanical strength fibre rovings bonded with a polymerised synthetic resin, the greater part of which spar is fixed in the shell (37), and an end portion of which, emerging from the shell (37), forms a torsible and flexible root portion (42) by means of which the spar (39) is intended to be attached to a hub (26), and

— preferably, a metal cover plate (40) on the leading edge and integrated in the shell (37), characterised in that the preformed filler body (38) has a cut-out (41) which extends over its entire length, opens into the face of the body (38) turned towards the low pressure side portion of the shell (37) and has a section corresponding substantially to that of the spar (39) in the portion thereof which is fixed in the shell (37), and that the portion of the spar (39) which is fixed in the shell (37) is arranged in the seating defined by the cut-out (41) of the filler body (38) and the facing low pressure side portion of the shell (37) and is directly fixed by its face turned towards the low pressure side against this low pressure side portion of the shell (37).

2. Blade according to Claim 1, characterised in that the shell (37) is composed of a stack, from the outside towards the inside, of at least one layer of glass fibre cloth or Kevlar, but preferably two layers crossed and inclined at 45° to the longitudinal axis of the blade (36), and at least one layer of carbon fibre cloth, but preferably two layers crossed and inclined in a similar manner.

3. Blade according to one of Claims 1 and 2, characterised in that a reinforcing strap (72), consisting of carbon fibre cloth preimpregnated with synthetic resin, covers the trailing edge (38a) of the filler body (38) onto which it is adhesively secured by its internal faces while its external faces are firmly adhesively secured to the internal face of the cloth forming the shell (37).

4. Blade according to one of Claims 1 to 3, characterised in that he root portion (42) of the spar (39) is arranged in a loop in which the end opposite to the portion of the spar (39) fixed in the shell (37) surrounds a fixing spool (43) for attaching the blade (36) to a hub (26).

5. Blade according to one of Claims 1 to 4, characterised in that the elongate ply forming the spar (39) consists of a single bundle of rovings which is folded back on itself in two equal halves, the inner portions of which, adjacent to the folding zone, form the root portion (42) of the spar (39), and the outer portions of which, remote from the folding zone, are attached to each other and form the portion of the spar (39) received in the shell (37).

6. Blade according to one of Claims 1 to 5, characterised in that it comprises a blade foot (44), through which the root portion (42) of the spar (39) passes, produced with extensions of the layer or layers of fibre cloth forming the shell (37) and covering a stack of layers of reinforcing fibre cloth (45).

7. Blade according to Claim 6, characterised in that the blade foot (44) consists of a hollow cylinder (46) which is connected by its outer end to the running portion of the blade (36) by a transition zone (47) and the inner end of which has the shape of a truncated cone.

8. Method for the manufacture of a blade according to one of Claims 1 to 7, by means of a lower half-mould (70) and an upper half-mould (71), the complementary impressions of which have respectively the shape of the high pressure side portion and of the low pressure side portion of the blade (36), which method consists of depositing in the lower half-mould (70) a flap (37 I) of at least one layer of high mechanical strength fibre cloth, impregnated with a polymerisable synthetic resin and intended to form the high pressure side portion of the shell (37) of the blade, characterised in that it additionally consists in:

— placing in position, above this layer or layers of cloth, a preformed filler body (38) made of a synthetic cellular or foam material, having over its entire length a cut-out (41) which opens into the face of the body turned towards the low pressure side,

— placing in position on the trailing edge (38a) of the filler body (38) a strap (72) consisting of carbon fibre cloth preimpregnated with synthetic resin and preformed by means of separate equipment,

— arranging in the cut-out (41) a portion intended to be fixed in the shell (37) of a single elongate ply of high mechanical strength fibre rovings, bonded with a polymerisable synthetic resin and intended to form the spar (39) of the blade (36), and one end portion of which, intended to form a root portion (42) of the spar (39), is arranged beyond a corresponding end of the filler body (38),

— arranging on the assembly thus formed in the lower half-mould (70) a flap (37 E) of at least one layer of high mechanical strength fibre cloth impregnated with polymerisable synthetic resin and intended to form the low pressure side portion of the shell (37),

— installing, preferably, a metal cover plate (40) on the leading edge in the lower half-mould (70), and finally

— placing the upper half-mould (71) on the lower half-mould (70) and polymerising the resin or resins impregnating and/or bonding the elements contained in the mould.

9. Method according to Claim 8, characterised in that it consists in using a single thermosetting synthetic resin to impregnate the flaps (37 I and 37 E) and the reinforcing strap (72) of each of the layers of fibre cloth of the shell (37) and for bonding the rovings of the single elongate ply of the spar (39), respectively after having cut out each layer in the form of an elongate layer comprising two adjacent flaps (37 I, 37 E) on each side of a longitudinal central axis corresponding to the leading edge of the shell (37) and intended to form, respectively, the high pressure side portion and the low pressure side portion of the shell (37), and after having laid out a single bundle of rovings folded back on itself in two equal halves in order to form the single ply of the spar (39), and that it consists in leaving the flap (37 E) of the low pressure side portions of each layer outside the lower half-mould (70) when the flap (37 I) of the high pressure side portion of the corresponding layer is deposited in the impression of the lower half-mould (70), then, after the filler body (38), the reinforcing strap (72) and the bundle of rovings have been placed in position, folding back the flap (37 E) of the low pressure side portion of each layer onto the body (38) and the bundle before installing the cover plate (40) on the leading edge, closing the mould, and carrying out a heat treatment to polymerise the resin.

0 212 724

_Fig.1_

_Fig.4a_

_Fig.4_

_Fig.2_

Fig.3

*Fig. 5*

*Fig. 6*

*Fig. 7*